# FASCICULE DE BREVET EUROPEEN

(11) **EP 3 439 870 B1**
(45) Date de publication et mention de la délivrance du brevet: **22.04.2020**
(21) Numéro de dépôt: 17715168.5
(22) Date de dépôt: 05.04.2017
(51) Int. Cl.: B32B 15/085, B32B 1/08, B32B 27/32, F16L 57/00, F16L 11/08

(54) **CONDUITE SOUS-MARINE COMPRENANT UNE GAINE COMPRENANT UN COPOLYMÈRE BLOC DU POLYPROPYLÈNE**
UNTERWASSERROHRS MIT EINER UMMANTELUNG MIT EINEM POLYPROPYLENBLOCKCOPOLYMERS
SUBMARINE PIPE COMPRISING A SHEATH COMPRISING A POLYPROPYLENE BLOCK COPOLYMER

(30) Priorité: 06.04.2016 FR 1653015
(43) Date de publication de la demande: 13.02.2019
(73) Titulaire: Technip France, 92400 Courbevoie (FR)
(72) Inventeur: DEMANZE, Frédéric, 76490 CAUDEBEC EN CAUX (FR)
(74) Mandataire: Lavoix
(86) Numéro de dépôt international: PCT/EP2017/058129
(87) Numéro de publication internationale: WO 2017/174664

(56) Documents cités:
- FR-A1- 3 020 440
- US-A- 4 606 953
- DATABASE WPI Week 200708 Thomson Scientific, London, GB; AN 2007-079588 XP002764778, & JP 2006 335780 A (FUJIKURA LTD) 14 décembre 2006 (2006-12-14)

## Description

La présente invention concerne une conduite sous-marine destinée au transport des hydrocarbures en eau profonde. L'invention est définie dans les revendications.

Ces conduites sont susceptibles d'être utilisées sous fortes pressions, supérieures à 100 bars, voire jusqu'à 1000 bars, et à des températures élevées, supérieures à 130°C, voire 170°C, pendant de longues périodes de temps, c'est-à-dire plusieurs années, typiquement 20 ans.

Les conduites sous-marines destinées au transport des hydrocarbures en eau profonde comprennent une couche de renforcement métallique autour d'une gaine polymérique interne d'étanchéité, dans laquelle circulent les hydrocarbures.

Le matériau constitutif de la gaine polymérique d'étanchéité interne doit être stable chimiquement et capable de résister mécaniquement au fluide transporté et à ses caractéristiques (composition, température et pression). Le matériau doit combiner des caractéristiques de ductilité, de résistance au temps (généralement, la conduite doit avoir une durée de vie d'au moins 20 ans), de résistance mécanique, à la chaleur et à la pression. Le matériau doit notamment être inerte chimiquement vis-à-vis des composés chimiques constituant le fluide transporté. Typiquement, les hydrocarbures transportés comprennent du pétrole brut, de l'eau, et des gaz sous pression, comme du sulfure d'hydrogène (H₂S) en une concentration généralement de l'ordre de 100 ppm, du dioxyde de carbone (CO₂) généralement à une pression comprise entre 1 bar et 100 bars et du méthane (CH₄) généralement à une pression comprise entre 1 bar et plusieurs centaines de bars. Les acides organiques peuvent par exemple être l'acide benzoïque, l'acide méthanoïque et/ou l'acide acétique. Ils augmentent l'acidité du pétrole brut (compris entre 0,1 et 8 TAN par exemple). Cette acidité peut conduire à la dégradation prématurée de certains polymères, comme les polyamides.

Une conduite sous-marine peut être flexible ou rigide. La gaine polymérique interne d'étanchéité d'une conduite rigide sous-marine est généralement à base de polyéthylène.

Divers matériaux polymères sont utilisés dans la gaine polymérique interne d'étanchéité d'une conduite flexible sous-marine, par exemple :
- le polyéthylène, notamment en polyéthylène haute densité, pour les applications à basse température (typiquement inférieures à 80°C),
- le polyamide (PA), notamment le polyamide 11. Contrairement au polyéthylène, le polyamide possède une bonne résistance au cloquage lorsqu'il est mis sous pression et en température, ainsi qu'une faible tendance au gonflement lorsqu'il est au contact du fluide pétrolier. Le polyamide est généralement utilisé pour des conditions de transport d'hydrocarbures pour lesquelles la pression est élevée et où la température reste de préférence en dessous de 90°C, voire pour une température qui peut s'élever jusqu'à 110°C.
   En revanche, un des inconvénients du polyamide est qu'il a tendance à s'hydrolyser en présence d'eau (souvent contenu dans les bruts de production) (vieillissement chimique). L'hydrolyse est rapide lorsqu'il est soumis à des températures (de l'ordre de 110°C et plus) et à des valeurs de pH faibles (pH inférieur à 7). Un autre inconvénient est son coût d'achat qui est sensiblement plus important que celui du polyéthylène.
- le polyfluorure de vinylidène (PVDF) possède une très bonne inertie chimique. Les gaines à base de PVDF peuvent supporter des pressions en service élevées ainsi que des températures pouvant atteindre 130°C-150°C.

Son inconvénient majeur reste son prix, bien plus élevé que celui du polyéthylène ou du polyamide.

De plus, certains PVDF présentent une sensibilité à la cavitation, ce qui limite son utilisation dans la gaine d'une conduite flexible. Sous l'effet de la pression interne dans la conduite flexible, la gaine polymérique, qui est relativement souple, est plaquée contre la face interne de la voûte de pression. La partie de la gaine polymérique qui n'est localement pas supportée par la couche de renforcement (c'est-à-dire la partie en face du déjoint) se déforme sous l'effet de la pression. Ce phénomène de déformation de la gaine polymérique dans les déjoints de la couche de renforcement est appelé fluage ou extrusion de la gaine polymérique. Dans ces conditions, ces déformations peuvent être à l'origine de l'apparition de cavitations sur la gaine polymérique. La cavitation est l'apparition et/ou la croissance de micro vide dans la matière en réponse à une sollicitation mécanique (déformation). Ce phénomène peut être ou non associé à un blanchiment de la matière (« stress whitening » en anglais). Ces cavitations peuvent conduire à terme à l'apparition de fissures et à une perte d'étanchéité de la gaine polymérique.

L'utilisation des matériaux thermoplastiques au sein des conduites flexibles non liées est résumée au sein du paragraphe 6.2.2 des API RP 17B (2008).

Le développement de gaine polymérique d'étanchéité interne alternative, moins chère et présentant des propriétés compatibles avec leur utilisation au contact d'hydrocarbures à haute température (faible gonflement, faible sensibilité à la cavitation, bonne résistance mécanique, notamment au fluage..., bonne résistance chimique aux composants des hydrocarbures) est recherché.

La demande WO 2013/128097 décrit une conduite flexible sous-marine destinée au transport des hydrocarbures en eau profonde comprenant une gaine polymérique d'étanchéité interne. Le polypropylène est cité dans une longue liste de polymères utilisables dans cette gaine.
Le polypropylène est utilisé dans l'industrie pétrolière offshore. En effet, il est largement utilisé pour ses propriétés d'isolant thermique (sa conductivité thermique est proche de 0,2 W/m/K). Il est également utilisé pour les tubes destinés au transport d'eau ou de gaz. Ces derniers sont soumis à des pressions et des températures largement inférieures aux conduites destinées au transport des hydrocarbures et les sollicitations mécaniques sont moindres. En effet, les conduites destinées au transport des hydrocarbures sont dynamiques et peuvent être soumises à des sollicitations (chocs thermique, dynamisme) à basse température (notamment lors d'un arrêt de production). Par ailleurs, lorsque l'on extrude sur un support mécanique comme une carcasse métallique, le polymère présente des contraintes de frettage importantes. Ces contraintes de frettage peuvent être de nature à permettre d'entretenir le phénomène de propagation rapide de fissure (« Rapid crack propagation » en anglais). Le polymère doit donc être résistant aux chocs à froid afin d'éviter la rupture et la propagation dite fragile. Un polymère adapté pour former la gaine d'une conduite pour le transport de gaz ou d'hydrocarbures n'est donc pas nécessairement adapté à former une gaine d'une conduite flexible sous-marine pour le transport d'hydrocarbures.

A ce sujet, les polypropylènes ne trouvent pas d'applications dans lesquelles ils pourraient être en contact avec les hydrocarbures.

Un polymère a plus ou moins d'affinité avec un fluide/solvant donné. Lorsque l'affinité du polymère avec un fluide est importante, le polymère gonfle, se délamine, et peut même se dissoudre partiellement ou totalement dans le fluide, ces phénomènes étant d'autant plus exacerbés que la température est importante. En l'occurrence, les fiches techniques des fournisseurs déconseillent d'utiliser les polypropylènes au contact avec les hydrocarbures dans la mesure où le polypropylène y est décrit comme étant incompatible avec les composés hydrocarbonés, en particulier à des températures élevées. Au contact des hydrocarbures, une matrice à base de polypropylène a tendance à gonfler. Les polypropylènes peuvent se dissoudre partiellement ou complètement dans des huiles à haute température par des phénomènes de gonflement et/ou de délamination.

De plus, le polypropylène est sujet au cloquage (« blistering » en anglais), phénomène qui survient après saturation de la matière en hydrocarbures suivi d'une dépressurisation plus ou moins rapide, ce qui est problématique pour une utilisation dans une couche d'une conduite. Plus précisément, dans une conduite, la gaine d'étanchéité en matériau polymère est utilisée pour transporter des fluides composés de pétrole brut, d'eau et de gaz sous pression et en température. Dans ces conditions d'utilisation, le matériau polymère de la gaine d'étanchéité absorbe les gaz et les huiles contenus dans le fluide pétrolier en fonction de leur nature chimique (via leur coefficient de solubilité) et de la pression partielle de chacun d'eux. Le temps de saturation du polymère, la mise en équilibre du système, dépend quant à lui des coefficients de diffusion et donc essentiellement de la température. Si la pression dans la conduite vient à diminuer, les gaz absorbés tendent à s'extraire du polymère afin de maintenir l'équilibre entre les concentrations interne et externe. Si la rupture de l'équilibre est très rapide, plus rapide que la vitesse de diffusion des gaz hors du polymère (comme dans le cas d'arrêt de production ou shut-down), le système n'est plus à l'équilibre. La sursaturation de gaz dans la gaine de polymère conduit à des gradients de concentration en gaz et de température qui peut engendrer l'expansion plus ou moins importante et brutale des gaz (« rapid gas décompression » en anglais) pouvant générer des endommagements irréversibles tels que l'apparition de cloques ou de fissures ou encore la formation d'une microporosité uniformément répartie dans l'épaisseur du matériau. Ainsi, l'apparition de cloques est due au piégeage de gaz solubles au sein de la gaine ou à la décompression trop rapide de la conduite ne permettant pas au gaz de diffuser hors de la gaine. Ce phénomène de cloquage peut être catastrophique pour la gaine d'étanchéité, et donc pour la conduite sous-marine qui la contient, puisqu'il peut conduire à la perte de sa fonction d'étanchéité.

Ces inconvénients du polypropylène ont amené l'homme du métier à délaisser le polypropylène comme polymère de la gaine interne d'étanchéité en contact avec les hydrocarbures au profit des polymères thermoplastiques précédemment cités.

Un des objectifs de la présente invention est de fournir une conduite sous-marine pour le transport d'hydrocarbures dont la gaine polymérique interne d'étanchéité est moins coûteuse que les gaines en polyamide ou en polyfluorure de vinylidène tout en présentant un faible gonflement et/ou un faible cloquage au contact des hydrocarbures à des températures élevées, typiquement supérieures à 90°C.

A cet effet, selon un premier objet, l'invention a pour objet une conduite sous-marine destinée au transport d'hydrocarbures, comprenant une couche de renforcement métallique autour d'une gaine polymérique interne d'étanchéité susceptible d'être en contact avec les hydrocarbures, caractérisée en ce que la gaine polymérique interne d'étanchéité comprend un copolymère bloc du polypropylène ou un mélange de copolymères blocs du polypropylène, où ledit copolymère bloc du polypropylène ou ledit mélange a :
- une densité (selon ISO 1183 révisée en 2012) supérieure à 0,900 g/cm³, et
- un melt index (également appelé indice de fluidité (IF)) (Melt flow index (MFI), Melt flow rate (MFR) ou Melt index (MI) en anglais) (selon ISO 1133 révisée en 2011) mesuré à 230°C sous une masse de 2,16kg inférieur à 10 g/10 minutes.

Par « gaine polymérique interne d'étanchéité susceptible d'être en contact avec les hydrocarbures » ou « couche susceptible d'être en contact avec les hydrocarbures », on entend que la gaine ou la couche entre en contact avec les hydrocarbures lorsque la conduite est mise en service. Ainsi, la conduite ne comprend pas de couche tubulaire interne (c'est-à-dire de couche étanche aux hydrocarbures) qui s'opposerait au contact entre les hydrocarbures et la gaine ou la couche. Typiquement, la conduite selon l'invention ne comprend pas de tube métallique ou de couche tubulaire polymérique revêtu(e) par la gaine polymérique interne d'étanchéité.

Toutefois, la conduite selon l'invention peut comprendre une (ou plusieurs) couche(s) tubulaire(s) revêtue(s) par la gaine polymérique interne d'étanchéité si cette(ces) couche(s) tubulaire(s) n'est (ne sont) pas étanche(s) aux hydrocarbures. Par exemple, la conduite sous-marine peut comprendre une couche tubulaire constituée d'éléments longitudinaux enroulés (par exemple une carcasse métallique) revêtue par la gaine polymérique interne d'étanchéité, car les hydrocarbures peuvent passer à travers les éléments longitudinaux.

Bien sûr, la conduite peut comprendre des couches tubulaires (métalliques et/ou polymériques) autour de la gaine polymérique interne d'étanchéité et/ou autour de la couche de renforcement, notamment comme décrit ci-après.

Il existe trois grandes classes de polypropylène, à savoir, les homopolymères (PPH), les copolymères bloc (également appelés « impact copolymer ») (PPB) et les copolymères statistiques (PPR) (désignations selon les normes ISO 15013 révisée en 2015 et ISO 1873-2 révisée en 2011). Un copolymère bloc du polypropylène comprend au moins un bloc polypropylène et au moins un bloc susceptible d'être obtenu par polymérisation d'une α-alpha oléfine, généralement l'éthylène. A titre d'exemple, le copolymère bloc du polypropylène est obtenu en deux étapes consistant en :
- homopolymérisation d'un polypropylène au sein d'un premier réacteur, et
- copolymérisation d'un propène et de l'éthylène au sein d'un deuxième réacteur. Ensuite le copolymère est distribué au sein de la chaine de l'homopolymère formant le copolymère bloc du polypropylène. Généralement, la proportion en poids en copolymère propène/ éthylène représente entre 5% et 25% du copolymère bloc du polypropylène. Un copolymère bloc du polypropylène est structurellement différent d'un copolymère statistique du polypropylène (PPR), tel qu'un copolymère statistique du polypropylène à cristallinité modifiée (PP-RCT). On peut notamment distinguer un copolymère bloc du polypropylène d'un copolymère statistique du polypropylène :
- par calorimétrie à balayage différentiel (« Differential scanning calorimetry » (DSC) en anglais)). On observe un seul pic correspondant à la température de fusion du copolymère statistique du polypropylène. A l'inverse, pour un copolymère bloc, deux pics distincts correspondant aux températures de fusion du copolymère bloc du polypropylène (du PP et du PE par exemple) sont observés.
- par analyse mécanique dynamique (AMD) (Dynamic mechanical analysis en anglais (DMA)), qui permet de mesure la température de transition vitreuse (Tg). Dans le cas des copolymères statistiques du polypropylène, on observe une seule Tg possédant une valeur intermédiaire à la valeur des Tg pour chacun des homopolymères, alors que pour les copolymères bloc du polypropylène on observe deux Tg.

Contre toute attente et à l'encontre des préjugés indiqués ci-dessus, il a été découvert qu'une sélection spécifique d'un grade de polypropylène, à savoir les copolymères blocs ayant un indice de fluidité et une densité spécifiques, ne présente pas les inconvénients de gonflement et de cloquage susmentionnés et est donc apte à être utilisée dans une gaine polymérique interne d'étanchéité destinée à entrer en contact avec les hydrocarbures.

Lorsque la gaine polymérique interne d'étanchéité comprend un mélange de copolymères blocs du polypropylène, il n'est pas obligatoire que chaque copolymère bloc du polypropylène qu'elle contient ait une densité et un indice de fluidité tels que définis dans la présente demande. Il suffit en effet que le mélange ait ces propriétés. Dans un mode de réalisation particulier, chaque copolymère bloc du polypropylène du mélange de copolymères blocs du polypropylène a une densité et un indice de fluidité tels que définis dans la présente demande.

La gaine polymérique interne d'étanchéité comprend un copolymère bloc du polypropylène ou un mélange de copolymères blocs du polypropylène dont la densité (selon ISO 1183 révisée en 2012) est supérieure à 0,900 g/cm³, typiquement supérieure à 0,902 g/cm³ , notamment supérieure à 0,905 g/cm³, de préférence supérieure à 0,910 g/cm³. De telles densités permettent que le copolymère bloc ou le mélange (et donc la gaine polymérique interne d'étanchéité), présente un taux de gonflement et une résistance au cloquage en présence d'hydrocarbures à température élevée compatibles avec une utilisation de la gaine comme gaine d'étanchéité destinée à être en contact avec des hydrocarbures dans une conduite pour le transport d'hydrocarbures.

La gaine polymérique interne d'étanchéité comprend un copolymère bloc du polypropylène ou un mélange de copolymères blocs du polypropylène dont l'indice de fluidité (selon ISO 1133 révisée en 2011) mesuré à 230°C sous une masse de 2,16kg est inférieur à 10 g/10 minutes, typiquement inférieur à 5 g/10 minutes, notamment inférieur à 2 g/10 minutes, de préférence inférieur à 0,5 g/10 minutes. De tels indices de fluidité permettent en effet la préparation de la gaine par extrusion jusqu'à des diamètres supérieurs à 40 cm.

Généralement le copolymère bloc du polypropylène ou le mélange de copolymères blocs du polypropylène de la gaine polymérique interne d'étanchéité de la conduite a :
- une densité (selon ISO 1183 révisée en 2012) inférieure à 0,915 g/cm³, et/ou
- un indice de fluidité (selon ISO 1133 révisée en 2011) mesuré à 230°C sous une masse de 2,16kg supérieur à 0,1 g/10 minutes.

A titre d'exemple de copolymère bloc du polypropylène présentant ces propriétés, on peut citer les copolymères blocs du polypropylène :
- PPC 1640 de Total avec une densité de 0,905 et un MFR de 0,3 mesuré à 230°C et sous 2,16 kg, ou
- PPC 1645 de Total avec une densité de 0,905 et un indice de fluidité de 0,3 mesuré à 230°C et sous 2,16 kg, ou
- PP H2222 36 de Lyondebasell avec une densité de 0,912 et un indice de fluidité de 0,3 mesuré à 230°C et sous 2,16kg, ou
- TUB 350-HM00 de Ineos avec une densité de 0,908 et un indice de fluidité de 0,3 mesuré à 230°C et sous 2,16 kg.

De préférence, le copolymère bloc du polypropylène ou le mélange de copolymères blocs du polypropylène de la gaine polymérique interne d'étanchéité de la conduite a une température de fusion (en considérant le pic correspondant à la température de fusion la plus haute en calorimétrie à balayage différentiel (« Differential scanning calorimetry » (DSC) en anglais) selon ISO 11357-3 de 2011) au moins égale à 145°C, notamment au moins égale à 150°C , typiquement au moins égale à 155°C et de préférence au moins égale à 160°C.

De préférence, le copolymère bloc du polypropylène a un taux de cristallinité d'au moins 40%, typiquement d'au moins 50%, ou le mélange de copolymères blocs du polypropylène comprend au moins un copolymère bloc du polypropylène ayant un taux de cristallinité d'au moins 40%, typiquement d'au moins 50% (voire chaque copolymère bloc du polypropylène du mélange de copolymères blocs du polypropylène a un taux de cristallinité d'au moins 40%, typiquement d'au moins 50%). Le taux de cristallinité peut être calculé en divisant la chaleur de fusion du copolymère bloc du polypropylène par la chaleur de fusion d'un copolymère bloc du polypropylène à 100% cristallin, généralement estimé à 209 joules/grammes.

De telles températures de fusion et taux de cristallinité participent à ce que le copolymère bloc du polypropylène ou le mélange, et donc la gaine polymérique interne d'étanchéité, présentent un taux de gonflement et une résistance au cloquage en présence d'hydrocarbures à température élevée compatibles avec une utilisation de la gaine comme gaine d'étanchéité destinée à être en contact avec des hydrocarbures dans une conduite pour le transport d'hydrocarbures.

Ainsi, typiquement, le copolymère bloc du polypropylène ou le mélange de copolymères blocs du polypropylène de la gaine polymérique interne d'étanchéité de la conduite présente un taux de gonflement inférieur à 30% en poids lorsqu'il est mis en contact avec du diesel Biofree EN 590 à 110°C durant 6 heures. Typiquement, le taux de gonflement est mesuré en pesant la masse Mᵢₙᵢₜᵢₐₗₑ d'un échantillon de gaine avant mise en contact avec le diesel Biofree EN 590. Cet échantillon est alors mis en contact avec du diesel Biofree EN 590 à 110°C durant 6 heures puis sa masse M_{finale} est mesurée. Le taux de gonflement est alors (M_{finale} - Mᵢₙᵢₜᵢₐₗₑ)/ Mᵢₙᵢₜᵢₐₗₑ.

Les propriétés mécaniques à froid de la gaine d'étanchéité interne de la conduite ont également une importance. En effet, les températures sur les sites de production et de stockage de la conduite peuvent être particulièrement basses, par exemple entre -20°C et 30°C, et la gaine doit préserver ses caractéristiques à de telles températures. Il est connu qu'un polypropylène homopolymère a des performances à froid plutôt médiocres et ce, aussi bien au niveau de la résistance au choc qu'au niveau de l'allongement à la rupture. Ainsi, à titre d'exemple, l'allongement à la rupture du grade Hostallen PPH 2250 36 de Lyondellbasell n'est que de 20% à 0°C, et sa résistance à l'impact sur éprouvette entaillée de l'ordre de 6 kJ /m² à 0°C. De plus, lors de la préparation et du refroidissement d'une pièce à base de polypropylène homopolymère d'une certaine épaisseur, des sphérolites de tailles importantes se forment et conduisent à une déchéance des propriétés mécaniques. Avantageusement, les copolymères blocs du polypropylène présentent de meilleures résistances à froid que les polypropylènes homopolymères.

Généralement, la morphologie cristalline du copolymère bloc du polypropylène est à plus de 50% type béta et/ou de type alpha, ou la morphologie cristalline d'au moins un copolymère bloc du polypropylène du mélange de copolymères blocs du polypropylène est à plus de 50% de type béta et/ou de type alpha (voire la morphologie cristalline de chaque copolymère bloc du polypropylène du mélange de copolymères blocs du polypropylène est à plus de 50% de type béta et/ou de type alpha). La présence et la proportion des formes alpha ou béta peut être mesurée par calorimétrie à balayage différentiel (DSC). De tels copolymères blocs du polypropylène ont en effet des performances mécaniques à froid améliorées, notamment une résistance aux chocs et un allongement à la rupture améliorés. Une pièce préparée à partir d'un copolymère bloc du polypropylène ayant une morphologie cristalline de type béta et/ou de type alpha a des sphérolites de tailles plus faibles. La structure d'un tel copolymère bloc du polypropylène est plus fine et plus homogène, ce qui a un impact favorable sur la solidité, la résistance sur éprouvette entaillée et l'aptitude au soudage du matériau. Une telle structure est généralement obtenue en préparant le(s) polypropylène(s) par polymérisation en présence d'un agent nucléant bétagène (qui favorise la formation des cristaux de type bêta) ou alphagène (qui favorise la formation des cristaux de type alpha). Les avantages susmentionnés obtenus grâce à l'utilisation d'agents nucléants sont particulièrement observés pour des pièces de fortes épaisseurs, ce qui est le cas de la gaine polymérique interne d'étanchéité qui peut avoir une épaisseur allant jusqu'à 150mm.

Généralement, la morphologie cristalline du copolymère bloc du polypropylène est à plus de 50% de type béta, ou la morphologie cristalline d'au moins un copolymère bloc du polypropylène du mélange de copolymères blocs du polypropylène est à plus de 50% de type béta (voire la morphologie cristalline de chaque copolymère bloc du polypropylène du mélange de copolymères blocs du polypropylène est à plus de 50% de type béta). En effet la morphologie cristalline alpha présente une structure de grain grossier entre les sphérolites, ce qui peut conduire à une rupture fragile du polypropylène lors de sollicitation externe. L'arrangement moléculaire de la forme cristalline bêta permet une amélioration des propriétés d'impact et de déformation du polypropylène par rapport à la phase alpha. Une telle structure est généralement obtenue en préparant le(s) polypropylène(s) par polymérisation en présence d'un agent nucléant bétagène.

Ainsi, la gaine polymérique d'étanchéité de la conduite selon la présente invention comprend un copolymère bloc du polypropylène présentant à basse température une bonne résistance au choc et un bon allongement à la rupture, ce qui est particulièrement avantageux dans le cas où la conduite est une conduite flexible à passage non lisse comportant une carcasse métallique. En effet, la fabrication d'une telle conduite nécessite d'extruder la gaine polymérique autour de la carcasse métallique. Or, la face externe de la carcasse métallique n'est pas lisse car elle présente au moins une rainure hélicoïdale de taille généralement importante, typiquement plusieurs millimètres de largeur et de profondeur. Par suite, lors de l'extrusion de la gaine polymérique d'étanchéité interne, le polymère fondu a tendance à s'écouler à l'intérieur de cette rainure si bien qu'après refroidissement la face interne de la gaine polymérique d'étanchéité interne comporte des excroissances géométriques complémentaires des rainures de la carcasse métallique. En outre, ces irrégularités géométriques de la face interne de la gaine polymérique d'étanchéité interne peuvent générer des concentrations importantes des contraintes et des déformations mécaniques appliquées localement au matériau polymère, notamment lorsque la conduite flexible est enroulée sur une bobine de faible diamètre comme cela se fait plusieurs fois pendant sa fabrication. Or, ces opérations d'enroulement et de déroulement devant pouvoir être faites en hiver lorsque la température est basse, il est nécessaire que la gaine polymérique d'étanchéité interne soit suffisamment ductile à basse température pour supporter sans dommage ces opérations, et ceci malgré les concentrations de contrainte et de déformation liées à la présence de la carcasse métallique. Par suite, les bonnes propriétés mécaniques à basse température des copolymères bloc du polypropylène selon la présente invention permettent d'employer avantageusement ces matériaux pour réaliser la gaine polymérique d'étanchéité interne de conduites flexibles comportant une carcasse métallique.

Les copolymères blocs du polypropylène utilisés dans la gaine polymérique interne d'étanchéité de la conduite selon l'invention sont commerciaux ou peuvent être préparés par des procédés connus de l'homme du métier, notamment par catalyse Ziegler-Natta, par catalyse métallocène ou tout autre type de catalyseur.

De préférence, le copolymère bloc du polypropylène est susceptible d'être obtenu par polymérisation en présence d'un agent nucléant bétagène (qui favorise la formation des cristaux de type bêta) et/ou alphagène (qui favorise la formation des cristaux de type alpha), ou le mélange de copolymères blocs du polypropylène comprend au moins un copolymère bloc du polypropylène susceptible d'être obtenu par polymérisation en présence d'un agent nucléant bétagène et/ou alphagène (voire chaque copolymère bloc du polypropylène du mélange de copolymères blocs du polypropylène est susceptible d'être obtenu susceptible d'être obtenu par polymérisation en présence d'un agent nucléant bétagène et/ou alphagène). Cet agent peut être introduit à tout moment, typiquement après la polymérisation (par exemple lors de la granulation) ou ajouté lors de l'étape de polymérisation. L'ajout d'un tel agent de nucléation influe sur la formation de la structure du polypropylène lors du refroidissement de la masse de polypropylène fondue et produit une structure plus fine et plus homogène. Les agents nucléants de type alphagène et/ou bétagène permettent d'obtenir des sphérolites de plus petites tailles à l'intérieur du polypropylène qu'en l'absence de tels agents. Ainsi, leur présence a un impact favorable sur la solidité, la résistance sur éprouvette entaillée et l'aptitude au soudage de la gaine en polypropylène obtenue. L'utilisation d'un agent nucléant bétagène est particulièrement préféré car le propylène obtenu a des propriétés d'impact et de déformation améliorées, comme indiqué ci-dessus. Il existe des procédés alternatifs qui peuvent être utilisés pour obtenir un polypropylène de morphologie cristalline béta, par exemple par transformation/refroidissement, mais un tel procédé est généralement plus complexe.

Le copolymère bloc du polypropylène de la conduite peut être réticulé, ou le mélange de copolymères blocs du polypropylène peut comprendre au moins un copolymère bloc du polypropylène réticulé (voire chaque copolymère bloc du polypropylène du mélange de copolymères blocs du polypropylène peut être réticulé).

Le copolymère bloc du polypropylène de la conduite peut être non réticulé, ou le mélange de copolymères blocs du polypropylène peut comprendre au moins un copolymère bloc du polypropylène non réticulé (voire chaque copolymère bloc du polypropylène du mélange de copolymères blocs du polypropylène peut être non réticulé).

Dans un mode de réalisation, la gaine polymérique interne d'étanchéité est multicouches, par exemple bi- ou tri-couches, étant entendu qu'au moins la couche susceptible d'être en contact avec les hydrocarbures comprend le copolymère bloc du polypropylène tel que défini ci-dessus ou le mélange de copolymères blocs du polypropylène tel que défini ci-dessus. La couche susceptible d'être en contact avec les hydrocarbures de la gaine polymérique interne d'étanchéité est la couche la plus interne de la gaine.

De préférence, la gaine polymérique interne d'étanchéité ne comprend qu'une seule couche.

La gaine polymérique interne d'étanchéité comprenant un copolymère bloc du polypropylène ou un mélange de copolymères blocs du polypropylène de la conduite selon l'invention (ou au moins la couche interne de la gaine polymérique interne d'étanchéité lorsque celle-ci est multicouches) comprend typiquement :
- une matrice polymérique, et
- éventuellement des composants dispersés de façon discontinue dans la matrice polymérique.

Par « matrice polymérique », on entend la phase continue polymérique qui forme la gaine polymérique interne d'étanchéité (ou la couche de la gaine polymérique interne d'étanchéité). La matrice polymérique est une matrice continue. La gaine polymérique interne d'étanchéité (ou la couche) peut éventuellement comprendre des composants dispersés de façon discontinue dans la matrice polymérique, mais qui ne font pas partie de la matrice polymérique. De tels composants peuvent par exemple être des charges telles que des fibres.

La matrice polymérique de la gaine polymérique interne d'étanchéité (ou de la couche interne de la gaine polymérique interne d'étanchéité lorsque celle-ci est multicouches) est généralement obtenue par extrusion d'un ou de plusieurs polymères (qui formeront la matrice polymérique) et éventuellement d'additifs (mélange maître). Lors de l'extrusion, certains additifs sont incorporés dans la matrice polymérique, alors que d'autres ne se mélangent pas avec les polymères formant la matrice polymérique et se dispersent de façon discontinue dans la matrice polymérique, pour former des composants dispersés de façon discontinue dans la matrice polymérique.

Selon une première alternative, la conduite selon l'invention comprend au moins une gaine polymérique interne d'étanchéité dont la matrice polymérique comprend un copolymère bloc du polypropylène ou un mélange de copolymères blocs du polypropylène. Si la gaine polymérique interne d'étanchéité est multicouches, la matrice polymérique d'au moins la couche interne de la gaine comprend un copolymère bloc du polypropylène ou un mélange de copolymères blocs du polypropylène.

Selon cette alternative, la gaine polymérique interne d'étanchéité dont la matrice polymérique comprend un copolymère bloc du polypropylène ou un mélange de copolymères blocs du polypropylène est généralement obtenue par extrusion d'un ou de plusieurs polymères (qui formera(ont) la matrice polymérique), au moins l'un d'eux étant un copolymère bloc du polypropylène, et éventuellement en présence d'additifs. Si la gaine polymérique interne d'étanchéité est multicouches, sa couche interne est généralement obtenue par co-extrusion d'une part d'un ou de plusieurs polymères (qui formera(ont) la matrice polymérique de la couche interne), au moins l'un d'eux étant un copolymère bloc du polypropylène, éventuellement en présence d'additifs, et d'autre part un(d') autre(s) polymère(s) qui formera(ont) la(les) autre(s) couche(s) de la gaine polymérique interne d'étanchéité multicouches.

Les composants dispersés de façon discontinue dans la matrice polymérique peuvent éventuellement comprendre des polymères, par exemple un copolymère bloc du polypropylène ou un mélange de copolymères blocs du polypropylène. Cela étant, une conduite :
- comprenant une gaine polymérique d'étanchéité comprenant un composant dispersé de façon discontinue dans la matrice polymérique (notamment des charges telles que des fibres) comprenant ou constituée d'un copolymère bloc du polypropylène ou d'un mélange de copolymères blocs du polypropylène,
- mais dont la matrice polymérique est exempte de un copolymère bloc du polypropylène ou un mélange de copolymères blocs du polypropylène,
   ne répond pas à la définition d'une conduite comprenant au moins une gaine polymérique d'étanchéité dont la matrice polymérique comprend un copolymère bloc du polypropylène ou un mélange de copolymères blocs du polypropylène, telle que définie dans cette première alternative.

Selon une deuxième alternative, la conduite selon l'invention comprend au moins une gaine polymérique interne d'étanchéité comprenant un composant dispersé de façon discontinue dans la matrice polymérique, ledit composant comprenant un copolymère bloc du polypropylène ou un mélange de copolymères blocs du polypropylène. Si la gaine polymérique interne d'étanchéité est multicouches, au moins sa couche interne comprend un composant dispersé de façon discontinue dans la matrice polymérique, ledit composant comprenant un copolymère bloc du polypropylène ou un mélange de copolymères blocs du polypropylène.

Selon cette deuxième alternative, un composant dispersé de façon discontinue dans la matrice polymérique de la gaine polymérique interne d'étanchéité (ou au moins sa couche interne lorsque la gaine est multicouches) comprend un copolymère bloc du polypropylène ou un mélange de copolymères blocs du polypropylène. Le composant peut être une charge telle qu'une fibre. Le composant comprenant un copolymère bloc du polypropylène ou un mélange de copolymères blocs du polypropylène est généralement un des additifs du mélange maitre utilisé lors de l'extrusion. Selon cette deuxième alternative, la matrice polymérique de la gaine polymérique interne d'étanchéité peut être exempte de copolymère bloc du polypropylène.

Selon une troisième alternative, la conduite selon l'invention comprend au moins une gaine polymérique interne d'étanchéité comprenant un composant dispersé de façon discontinue dans la matrice polymérique, ledit composant comprenant un copolymère bloc du polypropylène ou un mélange de copolymères blocs du polypropylène et dont la matrice polymérique comprend un copolymère bloc du polypropylène ou un mélange de copolymères blocs du polypropylène. Si la gaine polymérique interne d'étanchéité est multicouches, au moins sa couche interne comprend un composant dispersé de façon discontinue dans la matrice polymérique, ledit composant comprenant un copolymère bloc du polypropylène ou un mélange de copolymères blocs du polypropylène, et la matrice polymérique d'au moins sa couche interne comprend un copolymère bloc du polypropylène ou un mélange de copolymères blocs du polypropylène.

Selon cette troisième alternative, le copolymère bloc du polypropylène ou le mélange de copolymères blocs du polypropylène est donc présent à la fois dans la matrice polymérique et dans un composant dispersé de façon discontinue dans la matrice polymérique.

Généralement, la proportion massique du copolymère bloc du polypropylène ou du mélange de copolymères blocs du polypropylène dans la gaine polymérique interne d'étanchéité (ou dans au moins la couche interne de la gaine lorsque la gaine polymérique interne est multicouches) est supérieure à 50% en poids, notamment supérieure à 70% en poids par rapport à la gaine polymérique interne d'étanchéité.

La gaine polymérique interne d'étanchéité (ou au moins la couche interne de la gaine lorsque la gaine polymérique interne est multicouches) peut également comprendre un plastifiant, qui peut permettre de limiter le taux de gonflement de la gaine au contact des hydrocarbures en plus d'améliorer les performances de la gaine à froid (grâce à l'abaissement de la température de transition vitreuse de 10°C, voire de 25°C, mesurable par DSC). Sans vouloir être lié par une théorie particulière, la limitation du taux de gonflement de la gaine au contact des hydrocarbures pourrait s'expliquer par le fait que, dans les conditions normales d'utilisation de la gaine interne d'étanchéité, le plastifiant aurait tendance à s'échapper de la gaine ce qui conduirait à une perte massique au niveau de la gaine, qui serait compensée par les hydrocarbures qui ont une forte affinité avec le copolymère bloc du polypropylène. Par exemple, pour une gaine ayant un gonflement prévisible de 30%, un ajout de 10% massique de plastifiant pourrait conduire à un gonflement effectif final de 20%.

Le plastifiant peut par exemple être choisi parmi les composés défini dans l'ouvrage *Handbook of Plasticizers* édité par Georges Wypych. On peut notamment citer à titre d'exemple le sébaçate de dibutyle, le phtalate de dioctyle, le N-n-butylsulfonamide, les polyesters polymériques et les combinaisons de ceux-ci.

Avantageusement la gaine polymérique interne d'étanchéité comprend entre 0% et 20% en poids de plastifiant et préférentiellement entre 1 % et 1 0% en poids de plastifiant.

La gaine polymérique interne d'étanchéité (ou au moins la couche interne de la gaine lorsque la gaine polymérique interne est multicouches) peut également comprendre un modifiant choc, qui permet d'améliorer son comportement à froid. Des exemples de modifiants chocs sont décrits dans la littérature. On trouve de manière non limitative les références commerciales suivantes: ExactTM plastomer de chez Exxon Mobil, Novalene de Nova polymers inc, Engage™ 8100 de Dow Chemical, etc...

La gaine polymérique interne d'étanchéité comprend entre 0% et 20% de modifiant choc et préférentiellement entre 1 % et 10% de modifiant choc.

La gaine polymérique interne d'étanchéité comprenant un copolymère bloc du polypropylène ou un mélange de copolymères bloc du polypropylène (ou au moins la couche interne de la gaine lorsque la gaine polymérique interne est multicouches) peut comprendre d'autres additifs, tels que antioxydants, anti-UV, charges de renfort, adjuvant de fabrication et autres charges usuellement utilisées dans les thermoplastiques.

Typiquement, la gaine polymérique interne d'étanchéité (ou au moins la couche interne de la gaine lorsque la gaine polymérique interne est multicouches) est constituée de :
- 50 à 100% en poids de copolymère bloc du polypropylène ou d'un mélange de copolymères blocs du polypropylène,
- 0 à 20% en poids de plastifiant,
- 0 à 20% en poids de modifiant choc,
- 0 à 10% en poids d'additifs.

La conduite sous-marine selon l'invention peut être rigide ou flexible. Typiquement, le rayon de courbure minimum (« Minimum Bend Radius » MBR en anglais) d'une conduite rigide est 10 fois plus grand que celui d'une conduite flexible. Compte tenu du MBR d'une conduite flexible, sa gaine interne d'étanchéité peut être sollicitée en flexion de manière importante. Les caractéristiques mécaniques de la conduite flexible doivent lui permettre de répondre à des efforts (dus à l'enroulement de la conduite flexible avec des rayons de courbures 10 fois plus petits qu'une conduite rigide) plus importants par rapport à une conduite rigide.

Selon une première alternative, la conduite sous-marine selon l'invention est flexible. Généralement, sa couche de renforcement métallique est alors constituée d'un enroulement à pas long d'au moins un fil métallique à spires non jointives, typiquement une nappe d'armure de traction.

La conduite flexible comprend typiquement, de l'extérieur vers l'intérieur de la conduite :
- au moins une nappe d'armures de traction en tant que couche de renforcement,
- la gaine polymérique interne d'étanchéité,
- éventuellement une carcasse métallique.

Si la conduite comprend une carcasse métallique, elle est dite à passage non lisse ("rough-bore" en langue anglaise). Si la conduite est exempte de carcasse métallique, elle est dite à passage lisse ("smooth-bore" en langue anglaise).

La fonction principale de la carcasse métallique est de reprendre les efforts radiaux dirigés de l'extérieur vers l'intérieur de la conduite afin d'éviter l'effondrement (« collapse » en langue anglaise) de tout ou partie de la conduite sous l'effet de ces efforts. Ces efforts sont notamment liés à pression hydrostatique exercée par l'eau de mer lorsque la conduite flexible est immergée. Ainsi, la pression hydrostatique peut atteindre un niveau très élevé lorsque la conduite est immergée à grande profondeur, par exemple 200 bar lorsque la conduite est immergée à une profondeur de 2000 m si bien qu'il est alors souvent indispensable d'équiper la conduite flexible d'une carcasse métallique.

Lorsque la conduite flexible comprend une gaine polymérique externe, la carcasse métallique a aussi pour fonction d'empêcher l'effondrement de la gaine polymérique interne d'étanchéité lors d'une décompression rapide d'une conduite flexible ayant transporté des hydrocarbures. En effet, les gaz contenus dans les hydrocarbures diffusent lentement à travers la gaine polymérique interne d'étanchéité et se retrouvent en partie piégés dans l'espace annulaire compris entre la gaine polymérique interne d'étanchéité et la gaine polymérique externe. Par suite, lors d'un arrêt de production engendrant une décompression rapide de l'intérieur de la conduite flexible, la pression régnant dans cet espace annulaire peut temporairement devenir nettement supérieure à la pression régnant à l'intérieur de la conduite, ce qui en l'absence de carcasse métallique conduirait à l'effondrement de la gaine polymérique interne d'étanchéité.

Par suite, généralement, pour le transport d'hydrocarbures, une conduite comportant une carcasse métallique est préférée, alors qu'une conduite exempte de carcasse métallique sera adaptée pour le transport d'eau et/ou de vapeur d'eau sous pression. En outre, lorsque la conduite est destinée à la fois à transporter des hydrocarbures et à être immergée à grande profondeur, alors la carcasse métallique devient indispensable dans la plupart des applications.

La carcasse métallique est constituée d'éléments longitudinaux enroulés hélicoïdalement à pas court. Ces éléments longitudinaux sont des feuillards ou des fils en acier inoxydable agencés en spires agrafées les unes aux autres. Avantageusement, la carcasse métallique est réalisée en profilant un feuillard en forme de S puis en l'enroulant en hélice de façon à agrafer entre elles les spires adjacentes.

Dans la présente demande, la notion d'enroulement à pas court désigne tout enroulement hélicoïdal selon un angle d'hélice proche de 90°, typiquement compris entre 75° et 90°. La notion d'enroulement à pas long recouvre quant à elle les angles d'hélice inférieurs à 60°, typiquement compris entre 20° et 60° pour les nappes d'armures.

Les nappes d'armures de traction sont constituées de fils métalliques ou en matériau composite enroulés selon des pas longs et ont pour fonction principale de reprendre les efforts axiaux liés d'une part à la pression interne régnant à l'intérieur de la conduite flexible et d'autre part au poids de la conduite flexible notamment lorsqu'elle est suspendue. La présence d'une couche de renfort métallique supplémentaire destinée à reprendre les efforts radiaux liés à la pression interne, couche notamment appelée «voûte de pression », n'est pas indispensable dès lors que les angles d'hélice des fils constituant les nappes d'armures de traction sont proches de 55°. En effet, cet angle d'hélice particulier confère aux nappes d'armures de traction la capacité de reprendre, en plus des efforts axiaux, les efforts radiaux exercés sur la conduite flexibles et dirigés de l'intérieur vers l'extérieur de la conduite.

De manière préférée et notamment pour les applications en grande profondeur, outre les nappes d'armures de traction, la conduite flexible comprend une voûte de pression intercalée entre la gaine polymérique interne d'étanchéité et les nappes d'armures de traction. Dans un tel cas, les efforts radiaux exercés sur la conduite flexible, notamment les efforts radiaux dirigés de l'intérieur vers l'extérieur de la conduite sont repris par la voûte de pression afin d'éviter l'éclatement de la gaine polymérique interne sous l'effet de la pression régnant à l'intérieur de la conduite. La voûte de pression est constituée d'éléments longitudinaux enroulés à pas court, par exemple des fils métalliques de forme Z (zêta), C, T (téta), U, K ou X agencés en spires agrafées les unes aux autres.

Avantageusement et notamment en fonction du grade du matériau métallique constitutif des nappes d'armures de traction et de l'éventuelle voûte de pression, la conduite flexible peut comprendre une gaine polymérique externe d'étanchéité pour empêcher l'eau de mer de pénétrer au sein de la conduite flexible. Cela permet notamment de protéger les nappes d'armures de traction de l'eau de mer et donc de prévenir le phénomène de corrosion par l'eau de mer.

La nature, le nombre, le dimensionnement et l'organisation des couches constituant les conduites flexibles sont essentiellement liés à leurs conditions d'utilisation et d'installation. Les conduites peuvent comprendre des couches supplémentaires à celles susmentionnées.

Ces conduites flexibles conviennent notamment au transport de fluides, notamment d'hydrocarbures dans les fonds marins et ce, à de grandes profondeurs. Plus précisément elles sont dites de type non lié ("unbonded" en anglais) et elles sont ainsi décrites dans les documents normatifs publiés par l'American Petroleum Institute (API), API 17J (3ème édition - 1 er janvier 2009) et API RP 17B (4ème édition - Juillet 2008).

Les conduites flexibles peuvent être utilisées à grande profondeur, typiquement jusqu'à 3000 mètres de profondeur. Elles permettent le transport de fluides, notamment d'hydrocarbures, ayant une température atteignant typiquement 130°C et pouvant même dépasser les 150°C et une pression interne pouvant atteindre 1000 bars, voire 1500 bars.

La gaine polymérique interne d'étanchéité de la conduite flexible est typiquement tubulaire, a généralement un diamètre de 50 mm à 600 mm, de préférence de 50 à 400 mm, et/ou une épaisseur de 1 mm à 150 mm, préférentiellement de 4 à 15 mm et/ou une longueur de 1 m à 10 km.

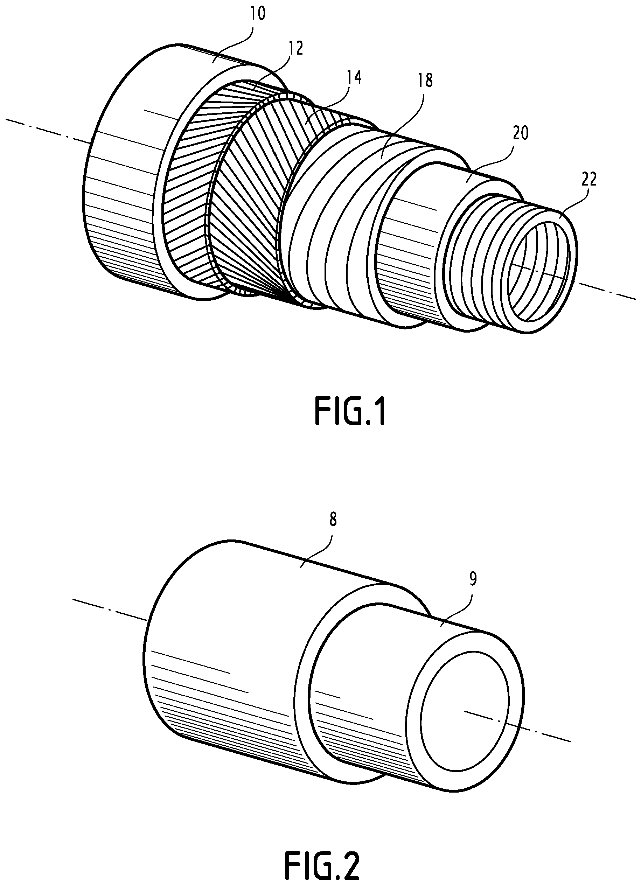

Selon une seconde alternative, la conduite sous-marine selon l'invention est rigide. Typiquement, elle comprend alors de l'extérieur vers l'intérieur une couche de renforcement métallique et la gaine polymérique interne d'étanchéité comprenant un copolymère bloc du polypropylène ou un mélange de copolymères blocs du polypropylène de densité et d'indice de fluidité tels que définis ci-dessus (figure 2).

La gaine polymérique interne d'étanchéité correspond alors au « liner » de la conduite rigide. Elle a typiquement une épaisseur jusqu'à 15mm. Le diamètre extérieur de la gaine polymérique interne d'étanchéité est généralement compris entre 10 cm et 130 cm.

Généralement, la couche de renforcement métallique est constituée d'un tube métallique. La couche de renforcement métallique est par exemple réalisée à base d'acier, d'acier inoxydable et/ou d'autres aciers à teneur en nickel variable.

La conduite rigide peut comprendre en outre une enveloppe pour l'isolation thermique et/ou la protection, qui peut se présenter sous la forme d'un tube externe en acier ou sous la forme d'une couche en polymère.

Plus particulièrement, une conduite rigide comprend typiquement un ensemble de tronçons agencés bout à bout, chacun d'une longueur généralement comprise entre 12m et 96m. L'enveloppe d'isolation thermique et/ou de protection est typiquement une couche époxy, polypropylène ou polyéthylène liée par fusion, et typiquement d'une épaisseur comprise entre 2mm et 4mm ou un tube en acier.

Une conduite comprenant une gaine polymérique interne d'étanchéité comprenant un copolymère bloc du polypropylène ou un mélange de copolymères blocs du polypropylène présente les avantages suivants :
- La gaine polymérique interne d'étanchéité a un taux de gonflement et une résistance au cloquage lorsqu'elle est mise en contact avec des hydrocarbures à températures élevées compatibles avec son utilisation comme gaine polymérique interne d'étanchéité d'une conduite destinée au transport des hydrocarbures. En particulier, la gaine polymérique interne d'étanchéité est capable de résister à des décompressions violentes, telles qu'observées lors d'arrêts de production, avec une bonne tenue au cloquage.
- Son taux de gonflement est plus faible et sa résistance au cloquage est améliorée par rapport à une gaine à base d'un propylène différent (PPH, PPR ou PPB ne présentant pas les caractéristiques de densité et d'indice de fluidité définies dans la demande).
- La gaine polymérique interne d'étanchéité est beaucoup moins coûteuse (jusqu'à 15 fois moins) qu'une gaine interne d'étanchéité à base de polyamide ou de PVDF.
- La gaine polymérique interne d'étanchéité ne présente pas de vieillissement chimique, contrairement à une gaine en polyamide.
- La gaine polymérique interne d'étanchéité est utilisable dans une conduite flexible de type « smooth bore » comme « rough bore »,
- Le polypropylène a des propriétés d'isolant thermique supérieures au polyamide ou polyéthylène. Ainsi, cela permet de s'affranchir d'une gaine isolante que l'on rajoute habituellement aux conduites.

Selon un deuxième objet, l'invention concerne un procédé de préparation de la conduite sous-marine définie ci-dessus, comprenant les étapes suivantes :
a) extrusion pour former la gaine polymérique interne d'étanchéité comprenant le copolymère bloc du polypropylène ou le mélange de copolymères blocs du polypropylène, l'extrusion étant éventuellement réalisée sur une autre couche,
b) assemblage de la gaine polymérique interne d'étanchéité obtenue à l'étape a) avec la couche de renforcement métallique.

L'étape a) d'extrusion peut être réalisée par toute méthode connue de l'homme du métier, par exemple en utilisant une extrudeuse mono-vis ou bi-vis.

Une matrice polymérique comprenant un copolymère bloc du polypropylène ou un mélange de copolymères blocs du polypropylène peut facilement être extrudée. Lorsque la gaine polymérique interne d'étanchéité comprend plusieurs polymères, le mélange des deux polymères peut être réalisé avant ou pendant l'extrusion.

Lorsque la gaine polymérique interne d'étanchéité est multicouches, la couche interne comprenant le copolymère bloc du polypropylène ou le mélange de copolymères blocs du polypropylène peut facilement être co-extrudée avec l'(les) autre(s) couche(s) de la gaine polymérique interne d'étanchéité.

Lorsque le copolymère bloc du polypropylène de la conduite est réticulé, ou lorsque le mélange de copolymères blocs du polypropylène comprend au moins un copolymère bloc du polypropylène réticulé le procédé comprend une étape supplémentaire c) de réticulation.

En fonction des voies de réticulation, l'étape c) de réticulation peut être réalisée par voie humide ou thermique avant ou après l'étape b) d'assemblage.

Par exemple, la réticulation peut être obtenue par voie peroxyde. L'étape a) d'extrusion est alors réalisée en présence d'un amorceur de réticulation permettant de générer des radicaux libres, typiquement un peroxyde. Le peroxyde est avantageusement choisi en fonction des paramètres d'extrusion du copolymère bloc du polypropylène ou du mélange de copolymères blocs du polypropylène. Par exemple, la température d'activation devrait être de préférence supérieure à la température d'extrusion du copolymère bloc du polypropylène ou du mélange de copolymères blocs du polypropylène, afin d'éviter que la réticulation ne se produise pendant l'étape a) d'extrusion. L'étape de réticulation c) est alors effectuée par voie thermique. Par exemple, un four à rayonnement infrarouge est disposé en sortie de ligne d'extrusion afin d'activer par voie thermique la réticulation. L'étape b) d'assemblage est ensuite réalisée.

Alternativement, la réticulation peut être obtenue par voie silane. Selon cette voie de réticulation, l'étape a) d'extrusion est réalisée avec un copolymère bloc du polypropylène ou un mélange de copolymères blocs du polypropylène auquel a été préalablement greffé un ou plusieurs groupements alkoxy-silane. Avantageusement, le copolymère bloc du polypropylène ou le mélange de copolymères blocs du polypropylène auquel a été préalablement greffé un ou plusieurs groupements alkoxy-silane possède un indice de fluidité mesuré à 230°C sous une masse de 2,16kg inférieur à 10 g/10 minutes, avantageusement inférieur à 5 g/10minutes, notamment inférieur à 2 g/10 minutes, de préférence inférieur à 0,5 g/10 minutes. L'étape c) de réticulation est réalisée par voie humide après l'étape a) d'extrusion et avantageusement après l'étape b) d'assemblage. Par exemple, de l'eau est mise en circulation à l'intérieur de la conduite obtenue à l'étape b). Afin de favoriser la réticulation, la température de l'eau mise en circulation est généralement supérieure à 80°C, supérieure à 100°C et avantageusement supérieure à 120°C.

Le greffage d'un ou plusieurs groupements alkoxy-silanes sur le copolymère bloc du polypropylène ou le mélange de copolymères blocs du polypropylène peut être réalisé selon plusieurs procédés connus de l'homme du métier. Par exemple, le copolymère bloc du polypropylène ou le mélange de copolymères blocs du polypropylène est extrudé sous forme d'un jonc en présence d'un amorceur de réticulation permettant de générer des radicaux libres, d'un monomère possédant un ou plusieurs groupement alkoxy-silane, et d'un catalyseur. Le catalyseur est majoritairement préservé de manière à ce qu'il ne génère pas de radicaux au sein de l'extrudeuse. En sortie d'extrusion, le jonc est refroidi et granulé. Puis l'étape de greffage est réalisée par post-cuisson des granulés à une température permettant le greffage du monomère possédant un ou plusieurs groupements alkoxy-silane.

La réticulation par voie silane est plus avantageuse que la réticulation par voie peroxyde car elle offre un procédé de mise en œuvre plus aisée en particulier, l'étape c) de réticulation ne requiert pas d'aménagement de la ligne d'extrusion particulièrement coûteux tel qu'un four de réticulation.

Avantageusement, le taux de réticulation est supérieur à 50% et préférentiellement supérieur à 75% mesuré selon la norme ASTM D2765 - 11.

Typiquement, lorsque la conduite sous-marine est une conduite flexible sous-marine, le procédé comprend les étapes suivantes :
a) extrusion pour former une gaine polymérique interne d'étanchéité comprenant le copolymère bloc du polypropylène tel que défini ci-dessus ou le mélange de copolymères blocs du polypropylène tel que défini ci-dessus, l'extrusion étant éventuellement réalisée sur une carcasse,
b) assemblage de la gaine polymérique interne d'étanchéité obtenue à l'étape a) avec au moins une nappe d'armures de traction (généralement deux nappes d'armures).

Si l'extrusion de l'étape a) n'est pas réalisée sur une carcasse, mais de manière indépendante, la conduite flexible obtenue est à passage lisse (« Smooth bore » en anglais).

Si l'extrusion de l'étape a) est réalisée sur une carcasse, la conduite flexible obtenue est à passage non lisse (« Rough bore » en anglais).

Lorsque la conduite flexible comprend d'autres couches, le procédé comprend l'étape b) d'assemblage de la gaine polymérique interne d'étanchéité obtenue lors de l'étape a) avec les autres couches pour former la conduite sous-marine flexible telle que la voûte de pression et/ou la gaine polymérique externe d'étanchéité. Les couches sont ainsi assemblées pour former une conduite flexible sous-marine de type non lié ("unbonded" en langue anglaise), telle que décrite dans les documents normatifs publiés par l'American Petroleum Institute (API), API 17J et API RP 17B.

Typiquement, lorsque la conduite sous-marine est une conduite rigide sous-marine, le procédé comprend les étapes suivantes :
a) extrusion pour former la gaine polymérique interne d'étanchéité comprenant le copolymère bloc du polypropylène ou le mélange de copolymères blocs du polypropylène,
b) assemblage de la gaine polymérique interne d'étanchéité obtenue à l'étape a) avec le tube métallique.

Selon un troisième objet, l'invention a pour objet une conduite sous-marine susceptible d'être obtenue par le procédé précité.

Selon un quatrième objet, l'invention a pour objet l'utilisation de la conduite sous-marine précitée pour le transport d'hydrocarbures.

Selon un cinquième objet, l'invention a pour objet l'utilisation d'un copolymère bloc du polypropylène ou un mélange de copolymères blocs du polypropylène, où ledit copolymère bloc du polypropylène ou ledit mélange a :
- une densité (selon ISO 1183 révisée en 2012) supérieure à 0,900 g/cm³, et
- un indice de fluidité (selon ISO 1133 révisée en 2011) mesuré à 230°C sous une masse de 2,16kg inférieur à 10 g/10 minutes,
dans une gaine polymérique interne d'étanchéité d'une conduite sous-marine destinée au transport d'hydrocarbures. Les modes de réalisations décrits ci-dessus sont bien sûr applicables.

D'autres particularités et avantages de l'invention ressortiront à la lecture de la description faite ci-après de modes de réalisation particuliers de l'invention, donnés à titre indicatif mais non limitatif, en référence aux figures 1 et 2.

La figure 1 est une vue schématique partielle en perspective d'une conduite flexible selon l'invention. Elle illustre une conduite conforme à l'invention comprenant, de l'extérieur vers l'intérieur :
- une gaine polymérique externe d'étanchéité 10,
- une nappe externe d'armures de traction 12,
- une nappe interne d'armures de traction 14 enroulée en sens opposé de la nappe externe 12,
- une voûte de pression 18 de reprise des efforts radiaux générés par la pression des hydrocarbures transportés,
- une gaine polymérique interne d'étanchéité 20, et
- une carcasse interne 22 de reprise des efforts radiaux d'écrasement,
dans laquelle la gaine polymérique interne d'étanchéité 20 comprend un copolymère bloc du polypropylène ou un mélange de copolymères blocs du polypropylène de densité et d'indice de fluidité tels que définis ci-dessus.

Du fait de la présence de la carcasse interne 22, cette conduite est dite à passage non lisse (" rough bore " en langue anglaise). L'invention pourrait aussi s'appliquer à une conduite dite à passage lisse (" smooth-bore " en langue anglaise), ne comportant pas de carcasse interne.

De même, on ne sortirait pas du champ de présente invention en supprimant la voûte de pression 18, sous réserve que les angles d'hélice des fils constituant les nappes d'armures 12, 14 soient proches de 55° et en sens opposé.

Les nappes d'armures 12, 14 sont obtenues par enroulement à pas long d'un ensemble de fils en matériau métallique ou composite, de section généralement sensiblement rectangulaire. L'invention s'appliquerait aussi si ces fils avaient une section de géométrie circulaire ou complexe, du type par exemple T autoagrafé. Sur la figure 1, seules deux nappes d'armures 12 et 14 sont représentées, mais la conduite pourrait aussi comporter une ou plusieurs paires supplémentaires d'armures. La nappe d'armures 12 est dite externe car elle est ici la dernière, en partant de l'intérieur de la conduite, avant la gaine d'étanchéité externe 10.

La conduite flexible peut également comprendre des couches non représentées sur la figure 1, telles que :
- une couche de maintien entre la gaine polymérique externe 10 et les nappes d'armures de traction 12 et 14, ou entre deux nappes d'armures de traction,
- une ou plusieurs couches anti-usure (" anti-wear layer " en anglais) en matériau polymérique en contact soit avec la face interne de la couche de maintien précitée, soit avec sa face externe, soit avec les deux faces, cette couche anti-usure permettant d'éviter que la couche de maintien s'use au contact avec des armures métalliques. Les couches anti-usure, qui sont bien connues de l'homme du métier, sont généralement réalisées par enroulement hélicoïdal d'un ou plusieurs rubans obtenus par extrusion d'un matériau polymérique à base de polyamide, de polyoléfines, ou de PVDF (" polyvinylidene fluoride " en anglais). On pourra aussi se reporter au document WO 2006/120320 qui décrit des couches anti-usure constituées de rubans en polysulfone (PSU), polyethersulfone (PES), polyphenylsulfone (PPSU), polyetherimide (PEI), polytétrafluoroéthylène (PTFE), polyétheréthercétone (PEEK) ou polysulfure de phénylène (PPS).

La figure 2 est une vue schématique partielle en perspective d'une conduite rigide selon l'invention. Elle illustre une conduite conforme à l'invention comprenant, de l'extérieur vers l'intérieur :
- une couche de renforcement métallique 8,
- une gaine polymérique interne d'étanchéité 9 comprenant un copolymère bloc du polypropylène ou un mélange de copolymères blocs du polypropylène de densité et d'indice de fluidité tels que définis ci-dessus.

### EXEMPLE :

### Exemple 1 : taux de gonflement de polypropylènes en présence d'un fluide pétrolier à température élevée

Des échantillons de différentes familles de polypropylène ont été pesés, puis mis en contact d'un fluide pétrolier : le Diesel Biofree EN 590, puis pesés après une mise en contact pendant une certaine durée dans ce fluide. L'écart de masse avant et après mise en contact permet de déterminer le taux de gonflement.

Les taux de gonflement (pourcentage massique) de différentes familles de polypropylène en présence d'un fluide pétrolier : le Diesel Biofree EN 590, ont été comparés et sont fournis au tableau 1.

**Tableau 1 : Taux de gonflement de divers polypropylènes en présence de Diesel Biofree EN 590**

| polypropylène | | indice de fluidité selon selon ASTM D1238 (g/10min) | densité selon ISO 1183 révisée en 2012 | taux de gonflement en présence de Diesel Biofree EN 590 | | |
|---|---|---|---|---|---|---|
| | | | | à 110°C | à 110°C | à 120°C |
| | | | | après 6h | après 188h | après 115h |
| homopolymère syndiotactique | FINAPLAST 1251 de Total | 2,0 | 0,88 | 31% | x | x |
| copolymère statistique | PPR 3221 de Total | 1,8 | 0,902 | 110% | x | x |
| copolymère bloc | PPC 3666 de Total | 1,5 | 0,905 | 17% | 48% | 53% |
| copolymère bloc | PPC 1640 de Total | 0,3 | 0,905 | 23% | 45% | 56% |
| copolymère bloc | PPC 1645 de Total | 0,3 | 0,905 | 15% | 28% | 37% |
| métallocène copolymère statistique | Lumicene MR10MX0 de Total | 10 | 0,902 | 88% | x | x |

Ces résultats montrent que les copolymères bloc du polypropylène utilisés dans la gaine de la conduite selon l'invention ont un faible taux de gonflement en présence d'hydrocarbures à températures élevées.

### Exemple 2 : Résistances de polypropylènes à des décompressions violentes

Plusieurs polypropylènes ont été saturés en gaz sous hautes températures et pression, puis on a fait chuter la pression à pression atmosphérique (1 bar) à une vitesse de décompression de 70 bar/min semblable au fonctionnement d'une conduite flexible. L'apparition de cloques à la surface des polypropylènes après ce traitement a été suivi (tableau 2).

**Tableau 2 : apparition de cloques à la surface de divers polypropylènes après décompressions violentes**

| polypropylène | | indice de fluidité selon ASTM D1238 (g/10min) | densité selon ISO 1183 révisée en 2012 | conditions de la mise en pression | | cloquage |
|---|---|---|---|---|---|---|
| | | | | gaz | température et pression | |
| copolymère bloc | PPC 3645 de Total | 1,3 | 0,905 | mélange 85% CH₄/15% CO₂ | 200 bar et 120°C | non |
| copolymère bloc | PPC 1645 de Total | 0,3 | 0,905 | mélange : 85% CH₄/15% CO₂ | 200 bar et 110°C | non |
| copolymère statistique | PPR 3221 de Total | 1,8 | 0,902 | mélange 85% CH₄/15% CO₂ | 200 bar et 110°C | oui |
| copolymère syndiotactique | FINAPLAS 1251 de Total | 2 | 0,88 | mélange 85% CH₄/15% CO₂ | 200 bar et 110°C | oui |

Ces résultats montrent que les copolymères blocs du polypropylène utilisés dans la gaine de la conduite selon l'invention sont capables de résister à des décompressions violentes simulant des arrêts de production.

## Revendications

1. Conduite sous-marine destinée au transport d'hydrocarbures comprenant une couche de renforcement métallique autour d'une gaine polymérique interne d'étanchéité susceptible d'être en contact avec les hydrocarbures, **caractérisée en ce que** la gaine polymérique interne d'étanchéité comprend un copolymère bloc du polypropylène ou un mélange de copolymères blocs du polypropylène, où ledit copolymère bloc du polypropylène ou ledit mélange a :
- une densité supérieure à 0,900 g/cm³, et
- un indice de fluidité mesuré à 230°C sous une masse de 2,16kg inférieur à 10 g/10 minutes.

2. Conduite sous-marine selon la revendication 1, dans laquelle le copolymère bloc du polypropylène ou le mélange de copolymères blocs du polypropylène a :
- une densité supérieure à 0,902 g/cm³, typiquement supérieure à 0,905 g/cm³, notamment supérieure à 0,910 g/cm³ et/ou
- un indice de fluidité mesuré à 230°C sous une masse de 2,16kg inférieur à 5 g/10minutes, typiquement inférieur à 2 g/10 minutes, notamment inférieur à 0,5 g/10 minutes.

3. Conduite sous-marine selon l'une quelconque des revendications 1 à 2, dans laquelle le copolymère bloc du polypropylène ou le mélange de copolymères blocs du polypropylène a une température de fusion au moins égale à 145°C, notamment au moins égale à 150°C, typiquement au moins égale à 155°C et de préférence au moins égale à 160°C.

4. Conduite sous-marine selon l'une quelconque des revendications 1 à 3, dans laquelle le copolymère bloc du polypropylène a un taux de cristallinité d'au moins 40%, typiquement d'au moins 50%, ou le mélange de copolymères blocs du polypropylène comprend au moins un copolymère bloc du polypropylène ayant un taux de cristallinité d'au moins 40%, typiquement d'au moins 50%.

5. Conduite sous-marine selon l'une quelconque des revendications 1 à 4, dans laquelle le copolymère bloc du polypropylène ou le mélange de copolymères blocs du polypropylène a taux de gonflement inférieur à 30% en poids lorsqu'il est mis en contact avec du diesel Biofree EN 590 à 110°C durant 6 heures.

6. Conduite sous-marine selon l'une quelconque des revendications 1 à 5, dans laquelle le copolymère bloc du polypropylène, ou l'au moins un copolymère bloc du polypropylène du mélange de copolymères blocs du polypropylène, a une morphologie cristalline à plus de 50% de type béta et/ou de type alpha, de préférence à plus de 50% de type béta.

7. Conduite sous-marine selon l'une quelconque des revendications 1 à 6, dans laquelle le copolymère bloc du polypropylène, ou l'au moins un copolymère bloc du polypropylène du mélange de copolymères blocs du polypropylène, est obtenu par polymérisation en présence d'un agent nucléant bétagène ou alphagène.

8. Conduite sous-marine selon l'une quelconque des revendications 1 à 7, dans laquelle la proportion massique du copolymère bloc du polypropylène, ou du mélange de copolymères blocs du polypropylène, dans la gaine polymérique interne d'étanchéité est supérieure à 50% en poids, notamment supérieure à 70% en poids par rapport à la gaine polymérique interne d'étanchéité.

9. Conduite sous-marine selon l'une quelconque des revendications 1 à 8, dans laquelle le copolymère bloc du polypropylène est réticulé, ou le mélange de copolymères blocs du polypropylène comprend au moins un copolymère bloc du polypropylène réticulé.

10. Conduite sous-marine selon l'une quelconque des revendications 1 à 9, dans laquelle la gaine polymérique interne d'étanchéité comprend :
- de 0 à 20% en poids de plastifiant, et/ou
- de 0 à 20% en poids de modifiant choc.

11. Conduite sous-marine selon l'une quelconque des revendications 1 à 10, qui est une conduite flexible et dont la couche de renforcement est constituée d'un enroulement à pas long d'au moins un fil métallique à spires non jointives.

12. Conduite sous-marine selon la revendication 11, comprenant, de l'extérieur vers l'intérieur :
- au moins une nappe d'armures de traction en tant que couche de renforcement,
- la gaine polymérique interne d'étanchéité,
- une carcasse métallique.

13. Conduite sous-marine selon l'une quelconque des revendications 1 à 10, qui est une conduite rigide et dont la couche de renforcement métallique est constituée d'un tube métallique.

14. Procédé de préparation de la conduite sous-marine selon l'une quelconque des revendications 1 à 13, comprenant les étapes suivantes :
a) extrusion pour former la gaine polymérique interne d'étanchéité comprenant le copolymère bloc du polypropylène ou le mélange de copolymères blocs du polypropylène, l'extrusion étant éventuellement réalisée sur une autre couche,
b) assemblage de la gaine polymérique interne d'étanchéité obtenue à l'étape a) avec la couche de renforcement métallique.

15. Utilisation d'une conduite sous-marine selon l'une quelconque des revendications 1 à 13 pour le transport d'hydrocarbures.

## Patentansprüche

1. Unterwasserleitung für den Transport von Kohlenwasserstoffen, die eine Metallverstärkungsschicht um einen inneren Polymerdichtungsschlauch, der geeignet ist, in Kontakt mit den Kohlenwasserstoffen zu sein, umfasst, **dadurch gekennzeichnet, dass** der innere Polymerdichtungsschlauch ein Blockcopolymer des Polypropylens oder eine Mischung aus Blockcopolymeren des Polypropylens umfasst, wobei das Blockcopolymer des Polypropylens oder die Mischung aufweist:
- eine Dichte größer als 0,900 g/cm³ und
- einen Schmelzflussindex, gemessen bei 230 °C bei einer Masse von 2,16 kg, kleiner als 10 g/10min.

2. Unterwasserleitung nach Anspruch 1, bei dem das Blockcopolymer des Polypropylens oder die Mischung aus Blockcopolymeren des Polypropylens aufweist:
- eine Dichte größer als 0,902 g/cm³, typischerweise größer als 0,905 g/cm³, insbesondere größer als 0,910 g/cm³ und/oder
- einen Schmelzflussindex, gemessen bei 230 °C bei einer Masse von 2,16 kg, kleiner als 5 g/10min, typischerweise kleiner als 2 g/10min, insbesondere kleiner als 0,5 g/10min.

3. Unterwasserleitung nach einem beliebigen der Ansprüche 1 bis 2, bei dem das Blockcopolymer des Polypropylens oder die Mischung aus Blockcopolymeren des Polypropylens eine Schmelztemperatur mindestens gleich 145 °C, insbesondere mindestens gleich 150 °C, typischerweise mindestens gleich 155 °C und vorzugsweise mindestens gleich 160 °C aufweist.

4. Unterwasserleitung nach einem beliebigen der Ansprüche 1 bis 3, bei der das Blockcopolymer des Polypropylens eine Kristallinität von mindestens 40 %, typischerweise mindestens 50 % aufweist oder die Mischung der Blockcopolymere des Polypropylens mindestens ein Blockcopolymer des Polypropylens mit einer Kristallinität von mindestens 40 %, typischerweise mindestens 50 % umfasst.

5. Unterwasserleitung nach einem beliebigen der Ansprüche 1 bis 4, bei der das Blockcopolymer des Polypropylens oder die Mischung der Blockcopolymere des Polypropylens ein Quellverhältnis kleiner als 30 Gew.% aufweist, wenn es/sie in Kontakt mit Diesel Biofree EN 590 bei 110 °C während 6 Stunden gesetzt wird.

6. Unterwasserleitung nach einem beliebigen der Ansprüche 1 bis 5, bei der das Blockcopolymer des Polypropylens oder das mindestens eine Blockcopolymer des Polypropylens der Mischung der Blockcopolymere des Polypropylens eine kristalline Morphologie von mehr als 50 % des Betatyps und/oder Alphatyps, vorzugsweise mehr als 50 % des Betatyps aufweist.

7. Unterwasserleitung nach einem beliebigen der Ansprüche 1 bis 6, bei der das Blockcopolymer des Polypropylens oder das mindestens eine Blockcopolymer des Polypropylens der Mischung der Blockcopolymere des Polypropylens durch Polymerisation in Anwesenheit eines betagenen oder alphagenen Keimmittels erhalten wird.

8. Unterwasserleitung nach einem beliebigen der Ansprüche 1 bis 7, bei der der Massenanteil des Blockcopolymers des Polypropylens oder der Mischung der Blockcopolymere des Polypropylens in dem inneren Polymerdichtungsschlauch größer als 50 Gew.%, insbesondere größer als 70 Gew.% in Bezug auf den inneren Polymerdichtungsschlauch ist.

9. Unterwasserleitung nach einem beliebigen der Ansprüche 1 bis 8, bei der das Blockcopolymer des Polypropylens vernetzt ist oder die Mischung der Blockcopolymere des Polypropylen mindestens ein vernetztes Blockcopolymer des Polypropylens umfasst.

10. Unterwasserleitung nach einem beliebigen der Ansprüche 1 bis 9, bei der der innere Polymerdichtungsschlauch umfasst:
- 0 bis 20 Gew.% Weichmacher und/oder
- 0 bis 20 Gew.% Schlagzähigkeitsmodifikator.

11. Unterwasserleitung nach einem beliebigen der Ansprüche 1 bis 10, die eine flexible Leitung ist und deren Verstärkungsschicht aus einer offenen Wicklung von mindestens einem Metalldraht mit nicht verbundenen Windungen gebildet ist.

12. Unterwasserleitung nach Anspruch 11, von außen nach innen umfassend:
- mindestens eine Zugbewehrungslage als Verstärkungsschicht,
- den inneren Polymerdichtungsschlauch,
- eine Metallkarkasse.

13. Unterwasserleitung nach einem beliebigen der Ansprüche 1 bis 10, die eine starre Leitung ist und deren Metallverstärkungsschicht aus einem Metallrohr gebildet ist.

14. Verfahren zum Herstellen der Unterwasserleitung nach einem beliebigen der Ansprüche 1 bis 13, die folgenden Schritte umfassend:
a) Extrudieren, um den innere Polymerdichtungsschlauch, der das Blockcopolymer des Polypropylens oder die Mischung der Blockcopolymere des Polypropylens umfasst, zu bilden, wobei die Extrusion gegebenenfalls auf einer anderen Schicht realisiert wird,
b) Zusammensetzen des bei Schritt a) erhaltenen inneren Polymerdichtungsschlauchs mit der Metallverstärkungschicht.

15. Verwendung einer Unterwasserleitung nach einem beliebigen der Ansprüche 1 bis 13 für den Transport von Kohlenwasserstoffen.

## Claims

1. Underwater pipe for the transport of hydrocarbons comprising a metal reinforcing layer around an inner polymeric sealing sheath capable of being in contact with the hydrocarbons, **characterized in that** the inner polymeric sealing sheath comprises a polypropylene block copolymer or a mixture of polypropylene block copolymers, wherein the polypropylene block copolymer or the mixture has:
- a density greater than 0.900 g/cm³, and
- a melt index measured at 230°C under a mass of 2.16 kg of less than 10 g/10 minutes.

2. Underwater pipe according to claim 1, wherein the polypropylene block copolymer or the polypropylene block copolymer mixture has:
- a density greater than 0.902 g/cm³, typically greater than 0.905 g/cm³, in particular greater than 0.910 g/cm³ and/or
- a melt index measured at 230°C under a mass of 2.16 kg of less than 5 g/10 min, typically less than 2 g/10 min, in particular less than 0.5 g/10 min.

3. Underwater pipe according to any one of the claims 1 to 2, wherein the polypropylene block copolymer or polypropylene block copolymer mixture has a melting temperature of at least 145°C, especially at least 150°C, typically at least 155°C, and preferably at least 160°C.

4. Underwater pipe according to any one of the claims 1 to 3, wherein the polypropylene block copolymer has a degree of crystallinity of at least 40%, typically at least 50%, or the polypropylene block copolymer mixture comprises at least one polypropylene block copolymer having a degree of crystallinity of at least 40%, typically at least 50%.

5. Underwater pipe according to any one of the claims 1 to 4, wherein the polypropylene block copolymer or the polypropylene block copolymer mixture has a swelling rate of less than 30% by weight when it is brought into contact with Biofree EN 590 diesel at 110°C for 6 hours.

6. Underwater pipe according to any one of the claims 1 to 5, wherein the polypropylene block copolymer, or the at least one polypropylene block copolymer of the polypropylene block copolymer mixture, has a crystalline morphology of more than 50% of the beta and/or alpha type, preferably more than 50% of the beta type.

7. Underwater pipe according to any one of the claims 1 to 6, wherein the polypropylene block copolymer, or the at least one polypropylene block copolymer of the polypropylene block copolymer mixture, is obtained by polymerization in the presence a betagenic or alphagenic nucleating agent

8. Underwater pipe according to any one of the claims 1 to 7, wherein the weight proportion of the polypropylene block copolymer, or polypropylene block copolymer mixture, in the inner polymeric sealing sheath is greater than 50% by weight, especially greater than 70% by weight relative to the inner polymeric sealing sheath.

9. Underwater pipe according to any one of the claims 1 to 8, wherein the polypropylene block copolymer is crosslinked, or the polypropylene block copolymer mixture comprises at least one crosslinked polypropylene block copolymer.

10. Underwater pipe according to any one of the claims 1 to 9, wherein the inner polymeric sealing sheath comprises:
- from 0 to 20% by weight of plasticizer, and/or
- from 0 to 20% by weight of impact modifier.

11. Underwater pipe according to any one of the claims 1 to 10, which is a flexible pipe, and wherein the reinforcing layer consists of a long pitch winding of at least one wire with non-contiguous turns.

12. Underwater pipe according to claim 11, comprising, from the outside to the inside:
- at least one layer of tensile armor as reinforcing layer,
- the inner polymeric sealing sheath,
- a metal carcass.

13. Underwater pipe according to any one of the claims 1 to 10, which is a rigid pipe, and wherein the metal reinforcing layer consists of a metal tube.

14. Method for preparing the underwater pipe according to any one of the claims 1 to 13, comprising the following steps:
a) extrusion to form the inner polymeric sealing sheath comprising the polypropylene block copolymer or the polypropylene block copolymer mixture, wherein the extrusion is possibly carried out on another layer,
b) assembling the inner polymeric sealing sheath obtained in step a) with the metal reinforcing layer.

15. Use of an underwater pipe according to any one of the claims 1 to 13 for the transport of hydrocarbons.
